# EUROPÄISCHE PATENTANMELDUNG

(11) **EP 4 001 861 A1**
(43) Veröffentlichungstag der Anmeldung: **25.05.2022**
(21) Anmeldenummer: 21208022.0
(22) Anmeldetag: 12.11.2021
(51) Int. Cl.: G01G 21/23

(54) **KRAFTÜBERTRAGUNGSELEMENT FÜR EINE WAAGE BZW. WÄGEZELLE**

(30) Priorität: 13.11.2020 DE 102020130068
(71) Anmelder: WIPOTEC GmbH, 67657 Kaiserslautern (DE)
(72) Erfinder: Gottfriedsen, Jan, 67714 Waldfischbach-Burgalben (DE); Klingelhöfer, Jan-David, 67663 Kaiserslautern (DE)
(74) Vertreter: Barth, Michael

(57) **Zusammenfassung**

Die Erfindung betrifft ein Kraftübertragungselement für eine Waage oder Wägezelle, wobei das Kraftübertragungselement dazu ausgebildet ist, zwischen einer die zu wiegende Last empfangenden Lastaufnahmeeinheit und einer Lasteinleitungsstelle einer Wägezelle angeordnet zu sein, um die von der Last ausgeübte Lastkraft zu übertragen, dadurch gekennzeichnet, dass das Kraftübertragungselement zumindest teilweise als Stabwerk aus Hohlstäben, insbesondere Rundstäben, ausgeführt ist, wobei das Kraftübertragungselement, insbesondere die Hohlstäbe, zumindest teilweise in 3D-Drucktechnologie hergestellt ist/sind.

## Beschreibung

Die vorliegende Erfindung betrifft ein Kraftübertragungselement für eine Waage oder Wägezelle, das zwischen einer die zu wiegende Last empfangenden Lastaufnahmeeinheit und einer Lasteinleitungsstelle einer Wägezelle angeordnet wird, um die von der Last ausgeübte Lastkraft zu übertragen, dadurch gekennzeichnet, dass das Kraftübertragungselement zumindest teilweise als Stabwerk aus Hohlstäben und zumindest teilweise in 3D-Drucktechnologie hergestellt ist.

In der automatisierten industriellen Herstellung von Produkten, z.B. von Lebensmitteln, Pharmazeutika usw. spielen Waagen eine große Rolle, weil sie z.B. die Qualitätskontrolle von abgefüllten Nennfüllmengen in Fertigpackungen kontrollieren, die Füllorgane nachregeln oder die Vollständigkeit der Verpackungen und Gebinde überprüfen, z.B. das Vorhandensein eines Beipackzettels in Tablettenschachteln.

Die hierfür verwendete Präzisionswägetechnik soll - aufgrund des gewünschten hohen Produktionsdurchsatzes - möglichst genaue Wägeergebnisse innerhalb einer möglichst kurzen Messzeit bestimmen.

Die an der Lasteinleitung einer Waage bzw. deren Lastmesssensor, der Wägezelle, montierte Masse verzögert aufgrund ihrer Massenträgheit das schnelle mechanische Einschwingen der Waagenmechanik auf den (möglichst stabilen) Endwert. Dies gilt für mechanische Biegestäbe mit Dehnungsmessstreifen ebenso wie für Wägezellen, die nach dem Prinzip der elektromagnetischen Kraftkompensation arbeiten und z.B. eine Monoblock-Hebelmechanik und ein Magnetsystem mit Tragspule verwenden.

Die an der/dem Lasteinleitung/Kraftübertragungselement einer Waage bzw. Wägezelle (insbesondere nach dem Prinzip der elektrodynamischen Kraftkompensation EMK, engl. EMFR- Electromagnetic Force Restoration) montierte bzw. angreifende Last (wie z.B. Lastgestänge/Lasteinleitungsbolzen, Lastplatte, Lasttransportsystem (z.B. Transportband/Gurtförderband bestehend aus Chassis, Fördergurt, Zahnriemen, Rollen/Wellen, Motor usw.) soll folgende Anforderungen (a) bis (d) gleichzeitig erfüllen:
(a) Geringe Eigenmasse (da aufgrund einer hohen Vorlast die Einschwingzeit verlängert wird);
(b) Hohe Steifigkeit (da sich dadurch eine hohe mechanische Eigenfrequenz und schnelles Einschwingen ergibt);
(c) Geringe Wärmeleitung (weil dadurch die thermische Beeinflussung des inneren Messsystems, insbesondere des Monoblocks, von außen über die Lasteinleitung kommend, reduziert ist)
(d) Elektrische Ableitfähigkeit (um elektrostatische Aufladungen, z.B. vom Produkt kommend, abzuleiten bzw. zu erden, und um so die Ausbildung von die Messung beeinflussenden statischen Kraftfeldern zu vermeiden bzw. zu reduzieren).

Die aktuell bekannten Lasteinleitungen/Kraftübertragungselemente sind in der Regel eher voluminös und schwer, da die gewünschte Steifigkeit üblicherweise durch die Verwendung massiver Bauteile erreicht wird. Die gewünschte geringe Wärmleitfähigkeit wird z.B. durch einen wärmeisolierenden Zwischenkörper aus Kunststoff bewirkt. Dabei sind diverse Verschraubungen notwendig, mit verlierbaren Kleinteilen und hohem Montageaufwand.

Bei Kraftübertragungselementen für eine Waage oder Wägezelle des Stands der Technik werden häufig als Materialien eine Kombination aus Metall und Kunststoff verwendet. Da Kunststoff jedoch ein E-Modul von kleiner 10.000 N/mm² aufweist, leidet darunter die Steifigkeit des Kraftübertragungselements, woraus eine niedrige mechanische Eigenfrequenz und ein langsames Einschwingen resultiert. Deshalb wird eine schnelle und gleichzeitig präzise Messung erschwert.

Zur Erhöhung der Steifigkeit könnte anstelle von Kunststoff beispielsweise Stahl verwendet werden. Stahl ist aber aufgrund seines hohen Eigengewichts und seiner hohen Wärmeleitfähigkeit nachteilig. Alternativ könnte Edelstahl verwendet werden, dessen Wärmeleitfähigkeit nur ca. 1/5 gegenüber Stahl beträgt. Jedoch ist Edelstahl spröde und schwerer durch spanende Verfahren zu bearbeiten.

Es war deshalb die Aufgabe der vorliegenden Erfindung, ein Kraftübertragungselement zur Verfügung zu stellen, das alle zuvor genannten Forderungen (a) bis (d) erfüllt sowie einfach und kostengünstig hergestellt werden kann.

Die vorliegende Erfindung stellt hierfür ein Kraftübertragungselement gemäß dem Patentanspruch 1 bereit. Bevorzugte Ausführungsformen werden in den Unteransprüchen 2 bis 13 beschrieben.

Die Erfindung beruht auf der Erkenntnis, ein Kraftübertragungselement mit besonders geringem Gewicht nach dem Prinzip der generativen Fertigung, auch bekannt als 3D-Drucktechnologie, herstellen zu können. Dabei werden in einer Richtung nacheinander dünne Materialschichten aufeinandergelegt und miteinander verbunden, um so nach und nach einen räumlichen Körper auszubilden, d.h. das Kraftübertragungselement wird mit seinen Komponenten durch Materialzufügung schichtweise aufgebaut.

Die Nutzung der 3D-Drucktechnologie in der speziellen Anwendung für Kraftübertragungselemente bietet mehrere signifikante Vorteile:
- Bekannte Kraftübertragungselemente werden in der Regel aus einer Kombination von Kunststoff- und Metallkomponenten aufgebaut, und sind deshalb in der Regel schwerer als nötig. Dickere Materialbereiche wärmen sich bei Änderung der Umgebungstemperatur außerdem langsamer auf oder kühlen langsamer ab als dünnere Materialbereiche, sodass unnötig Zeit vergeht, bis stationäre Betriebsbedingungen erreicht sind. Ein erfindungsgemäß hergestelltes Kraftübertragungselement weist nur dort Material auf, wo es funktionell erforderlich ist, sodass das Gesamtgewicht auf ein Minimum reduziert wird. Die Ausbildung der einzelnen Komponenten des erfindungsgemäßen Kraftübertragungselements als Stabwerk aus Hohlstäben mit möglichst kleinen Materialquerschnitten reduziert außerdem die Empfindlichkeit bei Temperaturänderungen.
- Bisher war es nötig, ein Kraftübertragungselement aus vielen verschiedenen einzelnen Komponenten zusammenzusetzen. Diese aufwändige Herstellung wird erfindungsgemäß stark vereinfacht.
- Aufgrund der hohen Fertigungspräzision lässt sich das erfindungsgemäße Kraftübertragungselement mittels 3D-Drucktechnologie sehr platzsparend ausbilden, so dass die Zwischenräume größer ausfallen und dort weitere Komponenten einer Waage untergebracht werden können.

Das erfindungsgemäße Kraftübertragungselement für eine Waage oder Wägezelle ist dazu ausgebildet, zwischen einer die zu wiegende Last empfangenden Lastaufnahmeeinheit und einer Lasteinleitungsstelle einer Wägezelle angeordnet zu sein, um die von der Last ausgeübte Lastkraft zu übertragen. Das erfindungsgemäße Kraftübertragungselement ist dadurch gekennzeichnet, dass es zumindest teilweise als Stabwerk aus Hohlstäben, insbesondere hohlen Rundstäben, ausgeführt ist, wobei das Kraftübertragungselement, insbesondere die Hohlstäbe, zumindest teilweise in 3D-Drucktechnologie hergestellt ist/sind.

Die Verwendung eines Stabwerks aus Hohlstäben führt zu einem leichten und dennoch stabilen Kraftübertragungselement. Weiterhin bleiben der Materialquerschnitt und somit die Wärmeleitfähigkeit dabei gering. Zusätzlich bieten die Hohlstäbe, insbesondere hohlen Rundstäbe, wenig Oberfläche/Luftwiderstand/Angriffsfläche für störenden Luftstrom/Luftzug, wodurch sich der Einsatz auch in durch Laminarflow beaufschlagter Pharmaproduktion anbietet. Die von der Elektronik und der Tragspule im Inneren der Wägezelle erzeugte aufsteigende warme Luft kann dadurch weniger den Messwert beeinflussen. Daher hat der Einsatz eines Stabwerks aus Hohlstäben sowohl innerhalb wie auch außerhalb des Wägezellen-/Waagengehäuses Vorteile. Weiterhin lagert sich an Rundstäben besonders wenig Schmutz ab, und sie können besonders gut gereinigt werden. Die Verwendung eines Stabwerks aus Hohlstäben ermöglicht eine platzsparende, filigrane Gestalt des erfindungsgemäßen Kraftübertragungselements. Dabei verbleibt ein freier Innenbereich, der für die Anordnung anderer Bauteile oder Baugruppen verwendet werden kann.

Die Wägezelle kann zum Beispiel ein Kraftsensor mit einer rein mechanischen Biegebalkenanordnung, die beispielsweise einen Dehnungsmessstreifen (DMS) als Kraftsensor verwendet, oder ein Kraftsensor sein, der nach dem Prinzip der elektromagnetischen Kraftkompensation (EMK) arbeitet. Es sind jedoch auch andere Arten von Kraftsensoren für die Wägezelle denkbar, die im Stand der Technik bekannt sind. Besonders bevorzugt wird das erfindungsgemäße Kraftübertragungselement in einer Wägezelle verwendet, die nach dem Prinzip der EMK arbeitet.

Die Lastaufnahmeeinheit kann eine Lastplatte, Lastschale oder Lasttransporteinheit sein. Die Lasteinleitungsstelle ist eine Stelle der Wägezelle, in die eine Last eingeleitet wird. Lastaufnahmeeinheit und Lasteinleitungsstelle werden vorzugsweise an das erfindungsgemäße Kraftübertragungselement gekoppelt. Das Kraftübertragungselement ist vorzugsweise als Modul zwischen Lastaufnahmeeinheit und Lasteinleitungsstelle angeordnet. Die Lastaufnahmeeinheit kann beispielsweise die zu messende Last von einer Lasttransporteinheit aufnehmen. Eine Lasttransporteinheit kann beispielsweise ein Förderband oder ein Drehstern sein.

Das erfindungsgemäße Kraftübertragungselement erstreckt sich in einer Längsrichtung X, einer dazu orthogonalen Querrichtung Y und einer zu diesen beiden Richtungen wiederum orthogonalen Höhenrichtung Z.

In einer Ausgestaltung ist das erfindungsgemäße Kraftübertragungselement vorzugsweise vollständig in 3D-Drucktechnologie hergestellt. Dadurch kann das erfindungsgemäße Kraftübertragungselement besonders leicht und dennoch stabil ausgestaltet werden.

In einer weiteren Ausgestaltung kann als Material für das erfindungsgemäße Kraftübertragungselement, insbesondere für den durch 3D-Drucktechnologie hergestellten Teil des Kraftübertragungselements, zumindest teilweise Edelstahl verwendet werden. Edelstahl hat gegenüber Stahl den Vorteil, dass er eine wesentlich geringere Wärmeleitfähigkeit aufweist. Weiterhin spielen bei der Verwendung von 3D-Drucktechnologie die Nachteile, die aufgrund des spröden Materialverhaltens von Edelstahl bei der Verwendung von spanenden Verfahren auftreten, keine so große Rolle.

Das erfindungsgemäße Kraftübertragungselement kann innerhalb oder außerhalb des Gehäuses einer Waage oder einer Wägezelle angeordnet sein, oder das Kraftübertragungselement kann das Gehäuse durchstoßen, d.h. durch die Wandung hindurchdurchtreten. In anderen Worten betrifft die vorliegende Erfindung auch eine Waage oder Wägezelle, bei der das Kraftübertragungselement innerhalb oder außerhalb des Gehäuses der Waage oder der Wägezelle angeordnet ist, oder bei der das Kraftübertragungselement das Gehäuse durchstößt. Die Anordnung innerhalb des Gehäuses ist erfindungsgemäß bevorzugt.

In einer weiteren Ausgestaltung ist es bevorzugt, dass das erfindungsgemäße Kraftübertragungselement eine Überlastsicherung der Wägezelle beinhaltet (als integraler Bestandteil oder in Freiräume hineinragend), und/oder dass das Kraftübertragungselement dazu ausgebildet ist, an eine Überlastsicherung mittelbar oder unmittelbar gekoppelt zu werden. Die Überlastsicherung ist vorzugsweise auslenkbar ausgebildet, um Kräfte bei einer Überlast abzubauen, bevor es zu Beschädigungen an Komponenten der Wägezelle oder der Waage kommt.

In einer weiteren Ausgestaltung kann das erfindungsgemäße Kraftübertragungselement mindestens drei, vorzugsweise vier, Endbereiche aufweisen. Die Endbereiche sind vorzugsweise dazu ausgebildet, mittelbar oder unmittelbar an die Lastaufnahmeeinheit und/oder die Lasteinleitungsstelle und/oder die Überlastsicherung montiert zu sein. Höchst bevorzugt sind die Endbereiche dazu ausgebildet, unmittelbar an die Überlastsicherung montiert zu sein.

In einer weiteren Ausgestaltung des erfindungsgemäßen Kraftübertragungselements ist es bevorzugt, dass das Kraftübertragungselement mindestens eine V-Struktur aufweist. Unter einer V-Struktur wird erfindungsgemäß vorzugsweise eine Struktur verstanden, bei der zwei Hohlstäbe so miteinander verbunden sind, dass sie miteinander ein "V" nachbilden. Die zwei Hohlstäbe werden hierin "Äste der V-Struktur" genannt. Der Punkt, an dem die beiden Äste der V-Struktur miteinander verbunden sind, wird hierin als "spitze Seite" der V-Struktur bezeichnet. An der gegenüberliegenden Seite befinden sich "Enden der Äste der V-Struktur". Die Verwendung einer V-Struktur hat den Vorteil einer relativ hohen mechanischen Stabilität, da sie die angreifenden Kräfte umlenken und bündeln kann.

In einer weiteren Ausgestaltung kann das erfindungsgemäße Kraftübertragungselement mindestens zwei V-Strukturen aufweisen. Die mindestens zwei V-Strukturen sind vorzugsweise über die spitzen Seiten der V-Strukturen mittelbar oder unmittelbar, vorzugsweise über ein gemeinsames Basiselement, miteinander verbunden. Dabei können die mindestens zwei V-Strukturen unmittelbar miteinander verbunden sein. Hier gibt es zwei Möglichkeiten, entweder sind sie direkt an den Enden der spitzen Seiten miteinander verbunden, wodurch sich in der Draufsicht die Struktur eines "X" ergibt, oder die mindestens zwei V-Strukturen sind in Richtung ihrer spitzen Seiten so ineinandergeschoben, dass sie zwei Verbindungen jeweils über die Äste der V-Strukturen aufweisen. Weiterhin können die mindestens zwei V-Strukturen auch mittelbar miteinander verbunden sein. In diesem Fall sind sie vorzugsweise über ein gemeinsames Basiselement miteinander verbunden. Die Verwendung eines Basiselements hat den Vorteil, dass darin beispielsweise Befestigungsmöglichkeiten oder Koppelstellen für weitere Waagenkomponenten, wie für den Lasteinleitungsbolzen bzw. die Lasteinleitungsstange der Wägezelle, vorgesehen sein können. Die Verwendung von V-Strukturen hat den Vorteil, dass das erfindungsgemäße Kraftübertragungselement besonders flach (in Höhenrichtung Z) ausgeführt werden kann.

In einer weiteren Ausgestaltung des erfindungsgemäßen Kraftübertragungselements liegen die Enden der Äste der V-Strukturen vorzugsweise in einer Ebene, die entlang der Längsrichtung X und der Querrichtung Y aufgespannt wird, d.h. die Enden der Äste bilden die Eckpunkte eines (gedachten) Rechtecks, insbesondere Quadrats oder Trapezes. Sieht man mit Blick in Z-Richtung (XY-Projektion) auf das erfindungsgemäße Kraftübertragungselement, so sieht man vorzugsweise genau zwei V-Strukturen, d.h. eine sogenannte Doppel-V-Struktur. Die Verwendung einer solchen Doppel-V-Struktur hat den Vorteil, dass beispielsweise gegenüber einer H-Struktur (in XY-Projektion) außermittige Kräfte bei der Beanspruchung der Struktur besser abgefangen werden können.

Vorzugsweise befinden sich die oben genannten Endbereiche, die dazu ausgebildet sind, mittelbar oder unmittelbar an die Lastaufnahmeeinheit und/oder die Lasteinleitungsstelle und/oder die Überlastsicherung montiert zu sein, an den Enden der Äste der V-Strukturen.

In einer weiteren Ausgestaltung des erfindungsgemäßen Kraftübertragungselements ist es bevorzugt, dass die spitzen Seiten der V-Strukturen ebenso in der entlang der Längsrichtung X und der Querrichtung Y aufgespannten Ebene liegen. Ebenso können die spitzen Seiten der V-Strukturen aber auch in Richtung der Höhenrichtung Z aus der entlang der Längsrichtung X und der Querrichtung Y aufgespannten Ebene heraustreten. Besonders bevorzugt weist jede der in XY-Projektion sichtbaren V-Strukturen zwei V-Strukturen auf, die in XY-Projektion übereinanderliegen. Diese übereinanderliegenden V-Strukturen sind vorzugsweise unmittelbar jeweils über ihre beiden Enden der Äste miteinander und mittelbar über ihre spitzen Seiten, vorzugsweise über einen Steg, miteinander verbunden.

Gemäß einer weiteren Ausgestaltung des erfindungsgemäßen Kraftübertragungselements weist dieses mindestens eine Koppelstelle zur Ankopplung an die Lasteinleitungsstelle der Wägezelle auf, wobei die Koppelstelle vorzugsweise zwischen den beiden V-Strukturen angeordnet ist. Vorzugsweise weist das Kraftübertragungselement mindestens zwei Koppelstellen auf, wobei eine der Koppelstellen eine Befestigung in Längsrichtung X über ein erstes Montagemittel und eine weitere der Koppelstellen eine Befestigung in Höhenrichtung Z über ein zweites Montagemittel ermöglicht. Dabei ist es bevorzugt, dass das Basiselement mindestens eine der Koppelstellen aufweist. Das Basiselement ist vorzugsweise zumindest teilweise als Platte und/oder Fläche ausgeführt. Vorzugsweise weist das Basiselement die Koppelstelle in Form einer Bohrung auf, an die der Lasteinleitungsbolzen der Wägezelle montiert ist. Die weitere Koppelstelle ist vorzugsweise an den spitzen Seiten der V-Struktur(en) vorgesehen.

In einer weiteren Ausgestaltung weist das erfindungsgemäße Kraftübertragungselement vorzugsweise eine größere Ausdehnung in der entlang der Längsrichtung X und der Querrichtung Y aufgespannten Ebene als eine Ausdehnung in Richtung der Höhenrichtung Z auf. Dies hat den Vorteil, dass die Stabilität des erfindungsgemäßen Kraftübertragungselements besonders hoch ist, und dadurch eine besonders gute Kraftübertragung zwischen Lastaufnahmeeinheit und Lasteinleitungsstelle stattfinden kann, insbesondere dann, wenn die Lastaufnahmeeinheit oder die Überlastsicherung an den Endbereichen und die Lasteinleitungsstelle mittig an dem Kraftübertragungselement befestigt sind. Bevorzugt ist die Ausdehnung in Richtung der Höhenrichtung Z maximal die Hälfte, stärker bevorzugt maximal ein Fünftel, und höchst bevorzugt maximal ein Zehntel der Ausdehnung in der entlang der Längsrichtung X und der Querrichtung Y aufgespannten Ebene.

Die vorliegende Erfindung betrifft auch ein Verfahren zur Herstellung eines erfindungsgemäßen Kraftübertragungselements unter Verwendung von 3D-Drucktechnologie. Ebenso betrifft die vorliegende Erfindung auch die Verwendung eines erfindungsgemäßen Kraftübertragungselements, das durch 3D-Drucktechnologie hergestellt ist, in einer Waage, insbesondere als modular alleinig kraftmäßig dazwischenliegendes Verbindungselement zwischen einer die zu wiegende Last empfangenden Lastaufnahmeeinheit und einer Lasteinleitungsstelle einer Wägezelle.

In dem/der erfindungsgemäßen Verfahren/Verwendung werden die einzelnen Komponenten des erfindungsgemäßen Kraftübertragungselements durch das wiederholte Aufbringen dünner Materialschichten aufeinander (3D-Drucktechnologie) ausgebildet. Vorzugsweise erfolgt die Herstellung einer Komponente "gleichzeitig" mit der Herstellung anderer Komponenten, wobei unter "gleichzeitig" zu verstehen ist, dass zunächst alle Materialbereiche einer bestimmten Schicht bzw. auf einer bestimmten Schichthöhe gebildet werden, bevor die nächsthöhere Schicht angelegt wird. Der Materialaufbau einer Komponente wird somit unterbrochen durch den Materialaufbau wenigstens einer weiteren Komponente, wenn beide Komponenten in der gleichen Schichthöhe Materialaufbau erfordern. Theoretisch ist es jedoch auch möglich, zunächst eine Komponente teilweise oder vollständig auszubilden, um anschließend eine weitere Komponente zu erstellen.

Die vorliegende Erfindung wird nun mithilfe der folgenden Figuren beschrieben:
- Fig. 1A: zeigt ein erfindungsgemäßes Kraftübertragungselement in Schrägansicht;
- Fig. 1B: zeigt das erfindungsgemäße Kraftübertragungselement in Schrägansicht, das gegenüber der Fig. 1A um 90° gedreht ist;
- Fig. 1C: zeigt das erfindungsgemäße Kraftübertragungselement mit Blick in Z-Richtung (XY-Projektion);
- Fig. 1D: zeigt das erfindungsgemäße Kraftübertragungselement mit Blick in Y-Richtung (XZ-Projektion);
- Fig. 1E: zeigt das erfindungsgemäße Kraftübertragungselement mit Blick in X-Richtung (YZ-Projektion);
- Fig. 1F: zeigt das erfindungsgemäße Kraftübertragungselement mit Blick in Y-Richtung (XZ-Projektion) von der der Fig. 1D gegenüberliegenden Seite;
- Fig. 1G: zeigt das erfindungsgemäße Kraftübertragungselement mit Blick in Z-Richtung (XY-Projektion) geschnitten entlang der XY-Projektionsebene;
- Fig. 1H: zeigt das erfindungsgemäße Kraftübertragungselement mit Blick in Y-Richtung (XZ-Projektion) geschnitten entlang der XZ-Projektionsebene; und
- Fig. 2: zeigt ein erfindungsgemäßes Kraftübertragungselement, an das eine Überlastsicherung gekoppelt ist.

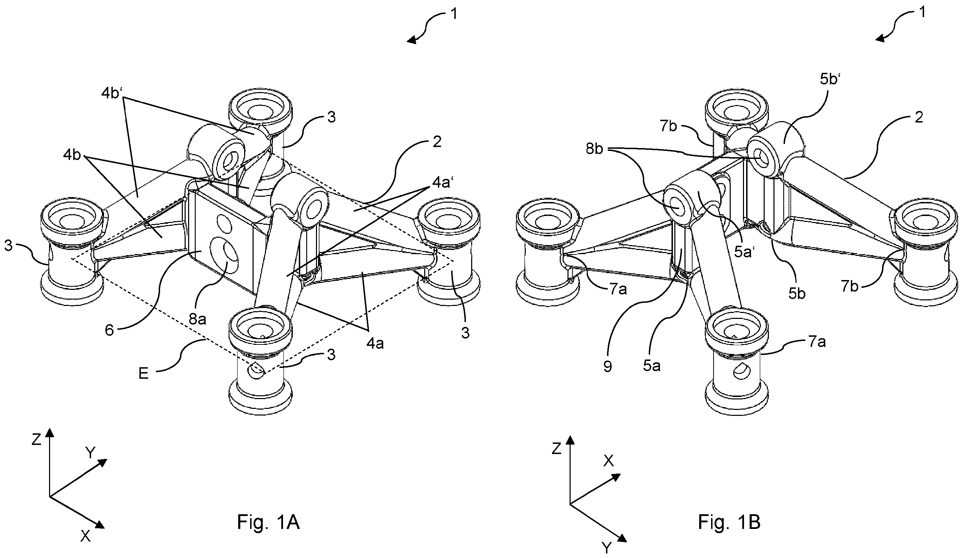

Fig. 1A und 1B zeigen jeweils ein erfindungsgemäßes Kraftübertragungselement 1 in Schrägansicht. Das Kraftübertragungselement 1 ist im Wesentlichen durch ein Stabwerk 2 aus Hohlstäben aufgebaut, die vorzugsweise hohle Rundstäbe sind. Das Kraftübertragungselement 1 weist vorzugsweise zwei erste V-Strukturen 4a, 4a' und zwei weitere V-Strukturen 4b, 4b' auf, wobei die ersten V-Strukturen 4a, 4a' und die weiteren V-Strukturen 4b, 4b' über ein Basiselement 6 miteinander verbunden sind. Es ist prinzipiell erfindungsgemäß auch möglich, dass eine der ersten V-Strukturen 4a, 4a' und eine der weiteren V-Strukturen 4b, 4b' weggelassen werden, sodass die erste V-Struktur entweder nur durch die V-Struktur 4a oder durch die V-Struktur 4a', und die zweite V-Struktur entweder nur durch die V-Struktur 4b oder durch die V-Struktur 4b' gebildet wird. In der in Fig. 1A gezeigten Ausführungsform liegen die V-Struktur 4a und die V-Struktur 4b in der Ebene, die durch die Längsrichtung X und die Querrichtung Y aufgespannt wird, d.h. sowohl die Enden 7a der Äste der ersten V-Struktur 4a und die Enden 7b der Äste der zweiten V-Struktur 4b, als auch die spitzen Seiten 5a und 5b liegen in der genannten Ebene. Gleichermaßen liegen bei den V-Strukturen 4a' und 4b' die Enden 7a der Äste der ersten V-Struktur 4a' und die Enden 7b der Äste der zweiten V-Struktur 4b' in der genannten Ebene, jedoch ragen die spitzen Seiten 5a' und 5b' in Z-Richtung aus der Ebene, die durch die Längsrichtung X und die Querrichtung Y aufgespannt wird. Die spitzen Seiten 5a und 5a' sind über einen Steg 9 miteinander verbunden, der sich vorzugsweise als Hohlstab entlang der Z-Richtung erstreckt. Ebenso sind auch die spitzen Seiten 5b und 5b' über einen Steg 9 miteinander verbunden, der sich ebenso vorzugsweise als Hohlstab entlang der Z-Richtung erstreckt. An den Endbereichen 3 sind Koppelstellen zum Koppeln einer Überlastsicherung vorgesehen, die vorzugsweise als Hohlzylinder entlang der Z-Richtung ausgebildet sind, welche vorzugsweise sowohl oben als auch unten (in Z-Richtung gesehen) Bereiche mit größeren Durchmessern (Kragen) aufweisen, um eine bessere Aufnahme, Abstützung und Positionierung der dort später angreifenden Bauteile zu ermöglichen. Die als Hohlzylinder ausgebildeten Endbereiche 3 weisen seitlich an der Mantelfläche jeweils mindestens eine tropfenförmige Öffnung auf, die dem Abfluss von nicht benötigtem Material zur Herstellung der Hohlbereiche der Hohlstäbe dienen. Das Basiselement 6 ist vorzugsweise als Platte ausgebildet, die sich entlang einer Ebene erstreckt, die durch die Längsrichtung X und die Höhenrichtung Z aufgespannt wird. Das Basiselement 6 weist vorzugsweise eine erste Koppelstelle 8a auf, die die Befestigung einer Lasteinleitungsstelle in Höhenrichtung Z über ein erstes Montagemittel ermöglicht. An den spitzen Seiten 5a' und 5b' ist ebenso eine Koppelstelle 8b vorgesehen, die die Befestigung einer Lasteinleitungsstelle in Längsrichtung X über ein zweites Montagemittel ermöglicht.

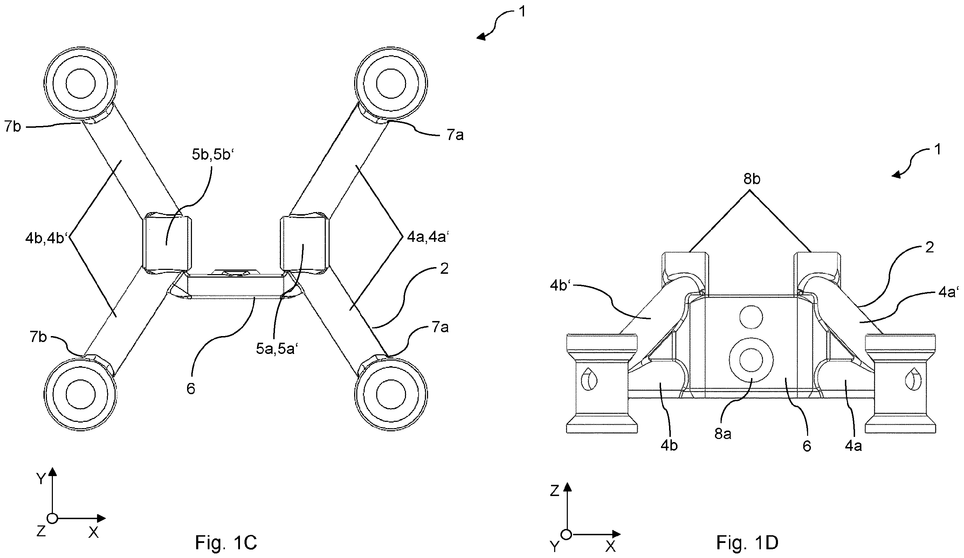

Fig. 1C zeigt das erfindungsgemäße Kraftübertragungselement 1 mit Blick in Z-Richtung (XY-Projektion). Aus dieser XY-Projektion kann entnommen werden, dass das erfindungsgemäße Kraftübertragungselement 1 eine sogenannte Doppel-V-Struktur aufweist. Das Basiselement 6 verbindet hier die erste V-Struktur 4a, 4a' mit der weiteren V-Struktur 4b, 4b'. Aufgrund des Blicks in Z-Richtung kann man hier nicht sehen, dass es zwei erste V-Strukturen 4a, 4a' und zwei weitere V-Strukturen 4b, 4b' gibt. Es ist jedoch klar ersichtlich, dass die spitze Seite 5a, 5a' und die spitze Seite 5b, 5b' entlang der X-Richtung einander zugewandt sind. Zur Erhöhung der Stabilität ragen die Enden 7a und 7b der Äste der ersten V-Struktur 4a, 4a' und der zweiten V-Struktur 4b, 4b' entgegen einer reinen H-förmigen Struktur in X-Richtung weiter nach außen.

Fig. 1D zeigt das erfindungsgemäße Kraftübertragungselement 1 mit Blick in Y-Richtung (XZ-Projektion). Hier schaut man mit Blick in Y-Richtung auf die große Fläche der Platte des Basiselements 6, das die erste Koppelstelle 8a als Bohrung (mit Senkung) durch das Basiselement 6 zeigt. Oberhalb des Koppelelements 8a ist eine weitere Bohrung durch die Platte des Basiselements 6 vorgesehen, die für die Anordnung eines Passstiftes vorgesehen ist.

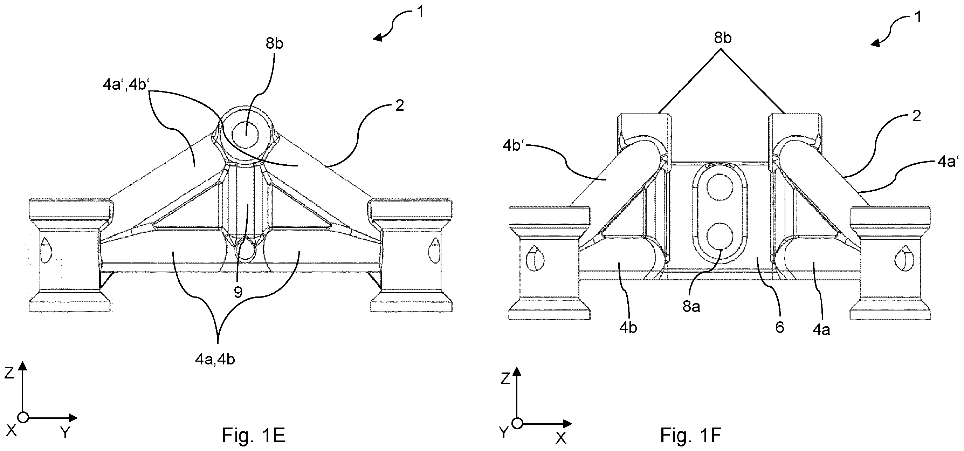

Fig. 1E zeigt das erfindungsgemäße Kraftübertragungselement 1 mit Blick in X-Richtung (YZ-Projektion). Hier sieht man, dass die erste V-Struktur 4a, 4a' bzw. die weitere V-Struktur 4b, 4b' über den Steg 9 miteinander verbunden sind.

Fig. 1F zeigt das erfindungsgemäße Kraftübertragungselement 1 mit Blick in Y-Richtung (XZ-Projektion) von der der Fig. 1D gegenüberliegenden Seite mit den gleichen Bezugszeichen wie in der Fig. 1D.

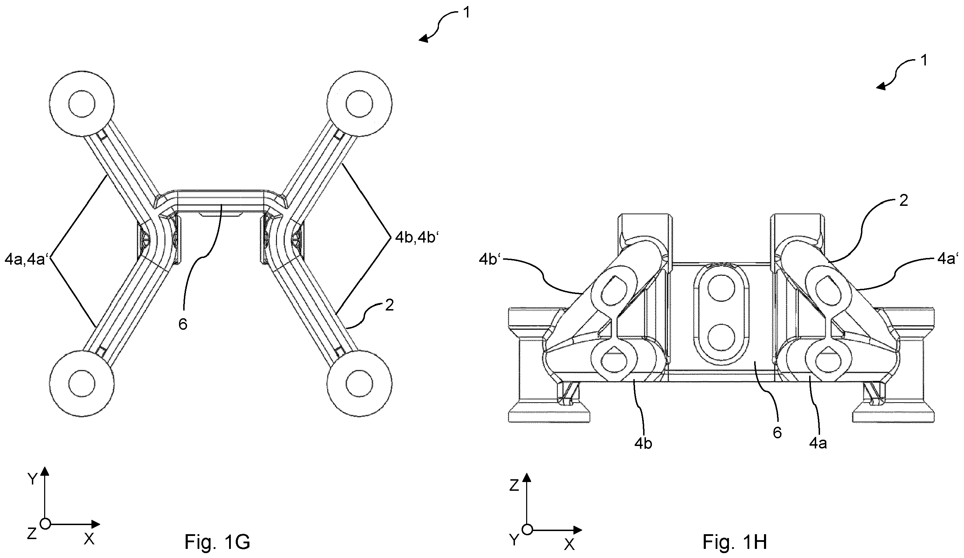

Fig. 1G zeigt das erfindungsgemäße Kraftübertragungselement 1 mit Blick in Z-Richtung (XY-Projektion) geschnitten entlang der XY-Projektionsebene. Fig. 1H zeigt das erfindungsgemäße Kraftübertragungselement mit Blick in Y-Richtung (XZ-Projektion) geschnitten entlang der XZ-Projektionsebene. Bei beiden Figuren wird deutlich, dass die Äste der ersten V-Struktur 4a, 4a' und der zweiten V-Struktur 4b, 4b' als Hohlstäbe, vorzugsweise hohle Rundstäbe, ausgebildet sind. Ebenso wird ersichtlich, dass das Basiselement 6 einen Hohlraum aufweist, der sich entlang der Z-Richtung in Fig. 1G erstreckt.

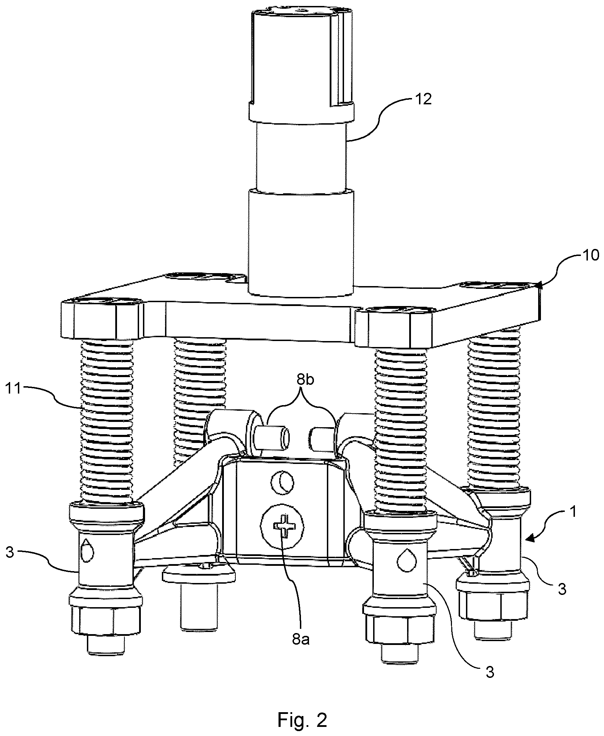

Fig. 2 zeigt ein erfindungsgemäßes Kraftübertragungselement 1, das an eine Überlastsicherung 10 gekoppelt ist. Die Überlastsicherung 10 ist hier vorzugsweise über Schrauben mit den vier als zylinderförmige Koppelstellen ausgebildeten Endbereichen 3 des Kraftübertragungselements 1 verbunden, wobei die Schrauben vorzugsweise mit als Druckfeder ausgeführten Federelementen 11 umgeben sind, die sicherstellen, dass eine Überlast abgefangen werden kann. Hier sieht man deutlich, dass mit dem erfindungsgemäßen Kraftübertragungselement 1 ein kombiniertes Element aus dem Kraftübertragungselement 1 und der Überlastsicherung 10 bereitgestellt werden kann, bei dem die Koppelstellen 8a und 8b zum Koppeln an die Lasteinleitungsstelle einer Wägezelle im Zentrum liegen. Die Überlastsicherung 10 weist ein Element 12 zum Koppeln mit einer Lastaufnahmeeinheit auf.

### Liste der Bezugszeichen:

- 1: Kraftübertragungselement
- 2: Stabwerk aus Hohlstäben
- 3: Endbereiche
- 4a, 4a': erste V-Struktur
- 4b, 4b': weitere V-Struktur
- 5a, 5a': spitze Seite der ersten V-Struktur
- 5b, 5b': spitze Seite der weiteren V-Struktur
- 6: Basiselement
- 7a: Enden der Äste der ersten V-Struktur
- 7b: Enden der Äste der zweiten V-Struktur
- 8a: erste Koppelstelle
- 8b: zweite Koppelstelle
- 9: Steg
- 10: Überlastsicherung
- 11: Federelemente
- 12: Element zum Koppeln mit Lastaufnahmeeinheit
- X: Längsrichtung
- Y: Querrichtung
- Z: Höhenrichtung
- E: Ebene, die durch die Längsrichtung X und die Querrichtung Y aufgespannt wird

## Patentansprüche

1. Kraftübertragungselement (1) für eine Waage oder Wägezelle,
wobei das Kraftübertragungselement (1) dazu ausgebildet ist, zwischen einer die zu wiegende Last empfangenden Lastaufnahmeeinheit und einer Lasteinleitungsstelle einer Wägezelle angeordnet zu sein, um die von der Last ausgeübte Lastkraft zu übertragen,
**dadurch gekennzeichnet, dass**
das Kraftübertragungselement (1) zumindest teilweise als Stabwerk aus Hohlstäben (2), insbesondere Rundstäben, ausgeführt ist, wobei das Kraftübertragungselement (1), insbesondere die Hohlstäbe, zumindest teilweise in 3D-Drucktechnologie hergestellt ist/sind.

2. Kraftübertragungselement (1) nach Anspruch 1, **dadurch gekennzeichnet, dass** das Kraftübertragungselement (1) wenigstens teilweise aus Edelstahl hergestellt ist, insbesondere der durch 3D-Drucktechnologie hergestellte Teil.

3. Kraftübertragungselement (1) nach einem der vorhergehenden Ansprüche, **dadurch gekennzeichnet, dass** das Kraftübertragungselement (1) eine Überlastsicherung der Wägezelle beinhaltet, und/oder dass das Kraftübertragungselement (1) dazu ausgebildet ist, an eine Überlastsicherung (10) mittelbar oder unmittelbar gekoppelt zu werden.

4. Kraftübertragungselement (1) nach einem der vorhergehenden Ansprüche, **dadurch gekennzeichnet, dass** das Kraftübertragungselement (1) mindestens drei, vorzugsweise vier, Endbereiche (3) aufweist, die dazu ausgebildet sind, mittelbar oder unmittelbar an die Lastaufnahmeeinheit und/oder die Lasteinleitungsstelle und/oder die Überlastsicherung (10) montiert zu sein.

5. Kraftübertragungselement (1) nach einem der vorhergehenden Ansprüche, **dadurch gekennzeichnet, dass** das Kraftübertragungselement (1) mindestens eine V-Struktur (4) aufweist.

6. Kraftübertragungselement (1) nach dem vorhergehenden Anspruch, **dadurch gekennzeichnet, dass** das Kraftübertragungselement (1) mindestens zwei V-Strukturen (4a, 4a', 4b, 4b') aufweist, die vorzugsweise über die spitzen Seiten (5a, 5b) der V-Strukturen (4a, 4a', 4b, 4b') mittelbar oder unmittelbar, vorzugsweise über ein gemeinsames Basiselement (6), miteinander verbunden sind.

7. Kraftübertragungselement (1) nach dem vorhergehenden Anspruch, **dadurch gekennzeichnet, dass** die Enden der Äste (7a, 7b) der V-Strukturen (4a, 4a', 4b, 4b') in einer Ebene (E) liegen, die durch die Längsrichtung X und die Querrichtung Y aufgespannt wird, d.h. die Enden der Äste bilden die Eckpunkte eines (gedachten) Rechtecks, insbesondere Quadrats oder Trapezes.

8. Kraftübertragungselement (1) nach dem vorhergehenden Anspruch, **dadurch gekennzeichnet, dass** die spitzen Seiten (5a, 5b) der V-Strukturen (4a, 4a', 4b, 4b') ebenso in der durch die Längsrichtung X und die Querrichtung Y aufgespannten Ebene (E) liegen, oder dass die spitzen Seiten (5a, 5b) der V-Strukturen (4a, 4a', 4b, 4b') in Richtung der Höhenrichtung Z aus der durch die Längsrichtung X und die Querrichtung Y aufgespannten Ebene (E) heraustreten.

9. Kraftübertragungselement (1) nach einem der vorhergehenden Ansprüche, **dadurch gekennzeichnet, dass** das Kraftübertragungselement (1) mindestens eine Koppelstelle (8a) zur Ankopplung an die Lasteinleitungsstelle der Wägezelle aufweist, wobei die Koppelstelle (8a) vorzugsweise zwischen den beiden V-Strukturen (4a, 4a', 4b, 4b') angeordnet ist.

10. Kraftübertragungselement (1) nach dem vorhergehenden Anspruch, **dadurch gekennzeichnet, dass** das Kraftübertragungselement (1) mindestens zwei Koppelstellen (8a, 8b) aufweist, wobei eine der Koppelstellen (8a) eine Befestigung in Höhenrichtung Z über ein erstes Montagemittel und eine weitere der Koppelstellen (8b) eine Befestigung in Längsrichtung X über ein zweites Montagemittel ermöglicht.

11. Kraftübertragungselement (1) nach einem der Ansprüche 9 oder 10, sofern sich diese auf den Anspruch 6 beziehen, **dadurch gekennzeichnet, dass** das Basiselement (6) mindestens eine Koppelstelle (8a) aufweist.

12. Kraftübertragungselement (1) nach einem der Ansprüche 6 bis 11, **dadurch gekennzeichnet, dass** das Basiselement (6) zumindest teilweise als Platte und/oder Fläche ausgeführt ist.

13. Kraftübertragungselement (1) nach einem der vorhergehenden Ansprüche, **dadurch gekennzeichnet, dass** das Kraftübertragungselement (1) eine größere Ausdehnung in einer durch die Längsrichtung X und die Querrichtung Y aufgespannten Ebene (E) als eine Ausdehnung in Richtung der Höhenrichtung Z aufweist, insbesondere die Ausdehnung in Richtung der Höhenrichtung Z maximal die Hälfte, stärker bevorzugt maximal ein Fünftel, und höchst bevorzugt maximal ein Zehntel der Ausdehnung in der durch die Längsrichtung X und die Querrichtung Y aufgespannten Ebene (E) ist.
